# EUROPEAN PATENT SPECIFICATION

(11) **EP 3 098 523 B1**
(45) Date of publication and mention of the grant of the patent: **07.11.2018**
(21) Application number: 16170634.6
(22) Date of filing: 20.05.2016
(51) Int. Cl.: F24D 19/10

(54) **FLUID-TYPE TEMPERATURE-REGULATING UNIT**
FLUID-TYPE TEMPERATURREGULIERENDE VORRICHTUNG
FLUIDE-TYPE UNITÉ DE RÉGULATION DE TEMPÉRATURE

(30) Priority: 22.05.2015 JP 2015104963
(43) Date of publication of application: 30.11.2016
(73) Proprietor: DAIKIN INDUSTRIES, LTD., Osaka 530-8323 (JP); Daikin Europe N.V., 8400 Oostende (BE)
(72) Inventor: CHIKAMI, Hideo, 8400 Oostende (BE); DEBAETS, Stefanie, 8400 Oostende (BE)
(74) Representative: Global IP Europe Patentanwaltskanzlei

(56) References cited:
- EP-A1- 2 413 042
- WO-A1-00/32992
- WO-A1-2014/109079
- JP-A- 2004 198 055

## Description

### TECHNICAL FIELD

The present invention relates to a fluid-type temperature-regulating unit.

### BACKGROUND ART

Patent Document 1 (International Publication Gazette WO 2011/129248) discloses a heat-pump-type hot-water supply system that uses a fluid-type temperature-regulating unit. The system is provided with three types of temperature-regulating devices, i.e., a radiator, a floor-warming apparatus, and a hot-water supply apparatus. As used herein, the term "temperature-regulating device" refers to a device for regulating the temperature of air, water, home-building materials, and various other objectives.

In this system, a plurality of temperature-regulating devices is connected to the same fluid circuit and is supplied with hot-heat from the fluid flowing therethrough. A single pump bears the load of fluid circulation.

WO 00/32992 A1 discloses a fluid-type temperature-regulating unit comprising: a heat exchanger having a heat-exchanger fluid inlet for a fluid to enter, and a heat-exchanger fluid outlet for the fluid endowed with cold-heat or hot-heat from a refrigerant to exit; a first feed port configured to feed the fluid to a first temperature-regulating device; a first feed channel configured to connect the heat-exchanger fluid outlet and the first feed port; a first recovery port configured to recover the fluid from the first temperature-regulating device; a first recovery channel connecting the heat-exchanger fluid inlet and the first recovery port; a first pump which is provided to the first recovery channel and which is configured to discharge the fluid from a first discharge port; a second feed port configured to feed the fluid to a second temperature-regulating device; a second feed channel connecting the heat-exchanger fluid outlet and the second feed port; a second recovery port configured to recover the fluid from the second temperature-regulating device; a second recovery channel connecting the heat-exchanger fluid inlet and the second recovery port; and a second pump which is configured to discharge the fluid from a second discharge port, wherein: the second pump is provided to the second recovery channel; and the first discharge port and the second discharge port both are in communication with the heat-exchanger fluid inlet so that the fluid discharged from the first discharge port and the second discharge port is allowed to merge.

### SUMMARY OF THE INVENTION

### <Technical Problem>

The temperature required by each temperature-regulating device may be different when a plurality of temperature-regulating devices is used. Therefore, temperature must be controlled individually for each temperature-regulating device. Implementing individual temperature control is not easy in a configuration in which a single pump is used for supplying hot-heat or cold-heat to all the temperature-regulating devices.

An object of the present invention is to implement precise temperature control that matches various demands on each of the temperature-regulating devices in a fluid-type temperature-regulating unit for supplying hot-heat or cold-heat to a plurality of temperature-regulating devices.

### <Solution to Problem>

A fluid-type temperature-regulating unit according to a first aspect of the present invention is provided with a heat exchanger, a first feed port, a first feed channel, a first recovery port, a first recovery channel, a first pump, a second feed port, a second feed channel, a second recovery port, a second recovery channel, and a second pump. The heat exchanger has a heat-exchanger fluid inlet for a fluid to enter, and a heat-exchanger fluid outlet for the fluid endowed with cold-heat or hot-heat from a refrigerant to exit. The first feed port feeds the fluid to a first temperature-regulating device. The first feed channel connects the heat-exchanger fluid outlet and the first feed port. The first recovery port recovers the fluid from the first temperature-regulating device. The first recovery channel connects the heat-exchanger fluid inlet and the first recovery port. The first pump is provided to the first recovery channel and discharges the fluid from a first discharge port. The second feed port feeds the fluid to a second temperature-regulating device. The second feed channel connects the heat-exchanger fluid outlet and the second feed port. The second recovery port recovers the fluid from the second temperature-regulating device. The second recovery channel connects the heat-exchanger fluid inlet and the second recovery port. The second pump is provided to the second recovery channel and discharges the fluid from a second discharge port. The first discharge port and the second discharge port are both in communication with the heat-exchanger fluid inlet so that the fluid discharged from the first discharge port and the second discharge port is allowed to merge. The fluid fed from the second feed port is a mixture of the fluid just after being endowed with heat from the refrigerant in the heat exchanger and the fluid from which heat has been taken by the second temperature regulating device.

In accordance with this configuration, the fluid-type temperature-regulating unit is provided with a first pump for actuating a first temperature-regulating device and a second pump for actuating a second temperature-regulating device. Therefore, by individually controlling the first pump and the second pump, the first temperature-regulating device and the second temperature-regulating device can each be independently operated or stopped.

A fluid-type temperature-regulating unit according to the first aspect of the present invention is such that at least one of the first pump and the second pump has an inverter for varying the flow rate of the fluid.

In accordance with this configuration, at least one of the first pump and the second pump is capable of varying the flow rate. Therefore, the fluid-type temperature-regulating unit can precisely control temperature because the degree of freedom for controlling the temperature of the fluid circuit is high.

A fluid-type temperature-regulating unit according to a second aspect of the present invention is the fluid-type temperature-regulating unit according to the first aspect, wherein the temperature of the fluid fed by the second feed port is different from the temperature of the fluid fed by the first feed port.

In accordance with this configuration, the temperatures of the fluids flowing to the first temperature-regulating device and the second temperature-regulating device are different. Therefore, the first temperature-regulating device and the second temperature-regulating device can be readily used in different applications.

A fluid-type temperature-regulating unit according to a third aspect of the present invention is the fluid-type temperature-regulating unit according to the second aspect, further comprising a mixing three-way valve. The mixing three-way valve is provided to the second feed channel and configured to send to the second feed port a mixture of the fluid that exits from the heat-exchanger fluid outlet and the fluid discharged from the second discharge port.

In accordance with this configuration, the fluid that flows from the second feed port is a mixture of the fluid immediately after having been endowed with cold-heat or hot-heat from the refrigerant in the heat exchanger and the fluid from which cold-heat or hot-heat has been taken by the second temperature-regulating device. Therefore, the temperature of the fluid fed to the second temperature-regulating device can be set so as to be different from the temperature of the fluid fed to the first temperature-regulating device.

A fluid-type temperature-regulating unit according to a fourth aspect of the present invention is the fluid-type temperature-regulating unit according to the third aspect, further comprising a heat-exchanger fluid outlet temperature sensor, a second discharge port temperature sensor, a mixed fluid temperature sensor, and a mixing ratio controller. The heat-exchanger fluid outlet temperature sensor measures the temperature of the fluid at the heat-exchanger fluid outlet. The second discharge port temperature sensor measures the temperature of the fluid at the second discharge port. The mixed fluid temperature sensor measures the temperature of the mixture expelled by the mixing three-way valve. The mixing ratio controller varies the mixing ratio at the mixing three-way valve in accordance with the output of the heat-exchanger fluid outlet temperature sensor, the second discharge port temperature sensor, and the mixed fluid temperature sensor.

In accordance with this configuration, the mixing ratio of the mixing three-way valve is controlled in accordance with the temperature of the fluid at the fluid outlet of the heat exchanger, the fluid at the second discharge port, and the mixed fluid. Therefore, the temperature of the fluid fed to the second temperature-regulating device can be automatically controlled.

A fluid-type temperature-regulating unit according to a fifth aspect of the present invention is the fluid-type temperature-regulating unit according to the fourth aspect, further comprising a first discharge port temperature sensor and a first flow rate controller. The first discharge port temperature sensor measures the temperature of the fluid at the first discharge port. The first flow rate controller varies flow rate in the first pump in accordance with the output of the first discharge port temperature sensor.

In accordance with this configuration, the flow rate of the first pump is controlled in accordance with the temperature of the fluid in at first discharge port. Therefore, the temperature of the fluid fed to the first temperature-regulating device can be automatically controlled.

A fluid-type temperature-regulating unit according to a sixth aspect of the present invention is the fluid-type temperature-regulating unit according to the fourth or fifth aspect, further comprising a second flow rate controller. The second flow rate controller varies flow rate at the second pump in accordance with the outputs of the second discharge port temperature sensor and the mixed-fluid temperature sensor.

In accordance with this configuration, the flow rate of the second pump is controlled in accordance with the temperatures of the mixed fluid and the fluid in the second discharge port. Therefore, the temperature of the fluid fed to the second temperature-regulating device can be controlled with greater efficiency.

A fluid-type temperature-regulating unit according to an seventh aspect of the present invention is the fluid-type temperature-regulating unit according to any one of the first to sixth aspects, further comprising a first check valve and a second check valve. The first check valve is provided between the first discharge port and a fluid merge point. The fluid merges at the fluid merge point. The second check valve is provided between the second discharge port and the fluid merge point.

In accordance with this configuration, a check valve is provided to the discharge port of each pump. Therefore, the fluid which has merged after having been discharged from the first pump and second pump is inhibited from flowing back to the first pump or the second pump.

A fluid-type temperature-regulating unit according to a eighth aspect of the present invention is the fluid-type temperature-regulating unit according to any one of the first to seventh aspects, further comprising a communication tube. The communication tube is in communication with a first intake port of the first pump and a second intake port of the second pump. The communication tube induces greater pressure loss than any of the first feed channel, the first recovery channel, the second feed channel, and the second recovery channel.

In accordance with this configuration, the communication tube is in communication with the first intake port and the second intake port. Therefore, when the fluid in the second recovery channel expands for some reason, the increase in volume of the fluid can be moved to the first recovery channel by way of the communication tube.

A fluid-type temperature-regulating unit according to a ninth aspect of the present invention is the fluid-type temperature-regulating unit according to any one of the first to eighth aspects, further comprising a refrigerant inlet port, a refrigerant outlet port, and a case. The refrigerant inlet port takes the refrigerant into the heat exchanger. The refrigerant outlet port expels the refrigerant from the heat exchanger. The case has a plurality of surfaces and accommodates the heat exchanger, the first feed channel, the first recovery channel, the first pump, the second feed channel, the second recovery channel, and the second pump. The first feed port, the first recovery port, the second feed port, the second recovery port, the refrigerant inlet port, and the refrigerant outlet port are provided on the same single surface among the plurality of surfaces.

In accordance with this configuration, each port is provided on the same surface of the case. Therefore, installation of the tubes is simple.

### <Effects of Invention>

In accordance with the fluid-type temperature-regulating unit according to the first aspect of the present invention, the first temperature-regulating device and the second temperature-regulating device can each be independently operated or stopped.

In accordance with the fluid-type temperature-regulating unit according to the first aspect of the present invention, the temperature can be precisely controlled.

In accordance with the fluid-type temperature-regulating unit according to the second aspect of the present invention, the first temperature-regulating device and the second temperature-regulating device can be more easily used in different applications.

In accordance with the fluid-type temperature-regulating unit according to the third aspect of the present invention, the temperature of the fluid fed to the second temperature-regulating device can be set so as to be different from the temperature of the fluid fed to the first temperature-regulating device.

In accordance with the fluid-type temperature-regulating unit according to the fourth aspect of the present invention, the temperature of the fluid fed to the second temperature-regulating device can be automatically controlled.

In accordance with the fluid-type temperature-regulating unit according to the fifth aspect of the present invention, the temperature of the fluid fed to the first temperature-regulating device can be automatically controlled.

In accordance with the fluid-type temperature-regulating unit according to the sixth aspect of the present invention, the temperature of the fluid fed to the second temperature-regulating device can be more efficiently controlled.

In accordance with the fluid-type temperature-regulating unit according to the seventh aspect of the present invention, backflow of the fluid can be inhibited.

In accordance with the fluid-type temperature-regulating unit according to the eighth aspect of the present invention, fluid that has expanded in the second recovery channel can be moved to the first recovery channel using a communication tube.

In accordance with the fluid-type temperature-regulating unit according to the ninth aspect of the present invention, installation of the tubes is simple.

### BRIEF DESCRIPTION OF THE DRAWINGS

FIG. 1 is an overview of the environment-regulating system 100;
FIG. 2 is a fluid circuit of the fluid-type temperature-regulating unit 10 according to the present invention;
FIG. 3 is a block diagram of the controller 200 of the fluid-type temperature-regulating unit 10 according to the present invention; and
FIG. 4 is schematic drawing of the external appearance of the fluid-type temperature-regulating unit 10 according to the present invention.

### DESCRIPTION OF EMBODIMENTS

### (1) Overall configuration

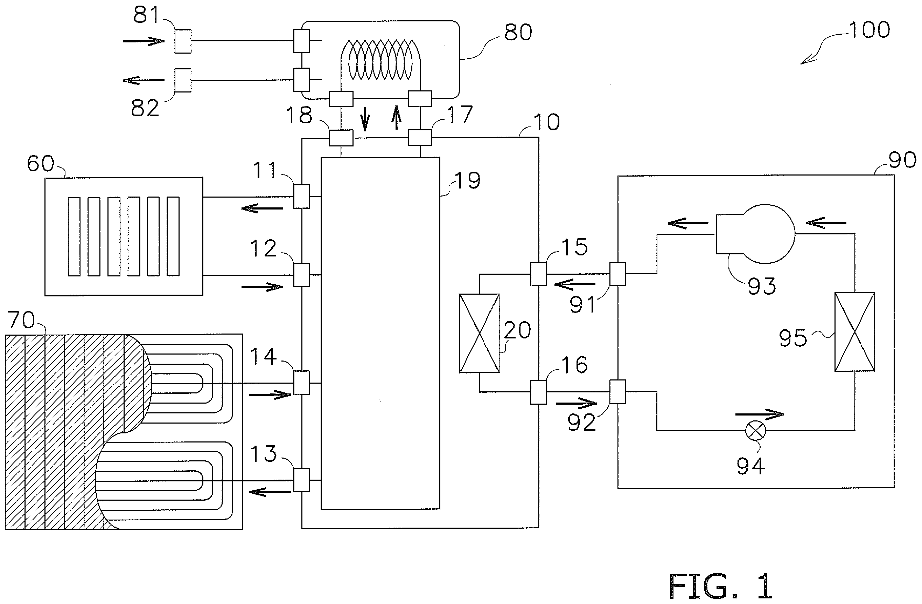

FIG. 1 shows an environment-regulating system 100 configured using the fluid-type temperature-regulating unit 10 according to the present invention. The environment-regulating system 100 is provided with a first temperature-regulating device 60, a second temperature-regulating device 70, and a third temperature-regulating device 80, for making the living environment of a user comfortable. The environment-regulating system 100 is furthermore provided with a fluid-type temperature-regulating unit 10 for circulating fluid such as water or brine to these devices, and a refrigerant circuit unit 90 for providing hot-heat to the fluid.

### (2) Detailed configuration

The components of the environment-regulating system 100 will be described with reference to FIG. 1.

### (2-1) First temperature-regulating device 60

The first temperature-regulating device 60 is a radiator. The first temperature-regulating device 60 receives a heated fluid from the fluid-type temperature-regulating unit 10, warms the indoor air of the user's house, and sends the cooled fluid back to the fluid-type temperature-regulating unit 10.

### (2-2) Second temperature-regulating device 70

The second temperature-regulating device 70 is a floor-warming apparatus. The second temperature-regulating device 70 receives heated fluid from the fluid-type temperature-regulating unit 10, warms the floor of the user's house, and sends the cooled fluid back to the fluid-type temperature-regulating unit 10.

### (2-3) Third temperature-regulating device 80

The third temperature-regulating device 80 is a hot-water supply apparatus, which receives heated fluid from the fluid-type temperature-regulating unit 10, and heats tap water that enters from a tap water inlet 81 to produce hot water, and expels the hot water from a hot-water port 82. The cooled fluid is sent back to the fluid-type temperature-regulating unit 10.

### (2-4) Refrigerant circuit unit 90

The refrigerant circuit unit 90 generates hot-heat using a refrigerant, and transmits the hot-heat to the fluid-type temperature-regulating unit 10. A refrigerant outlet port 91 and a refrigerant inlet port 92 are provided to the refrigerant circuit unit 90. The refrigerant circuit unit 90 furthermore has a compressor 93, a decompressor 94, and an air-refrigerant heat exchanger 95 that functions as an evaporator. High-pressure liquid refrigerant that has entered from the refrigerant inlet port 92 is decompressed by the decompressor 94 to become a low-pressure gas-liquid two-phase refrigerant. The low-pressure gas-liquid two-phase refrigerant receives heat from the air-refrigerant heat exchanger 95 and is evaporated to become a low-pressure gas refrigerant. The low-pressure gas refrigerant is compressed by the compressor 93 to become high-pressure gas refrigerant, which departs from the refrigerant outlet port 91.

### (2-5) Fluid-type temperature-regulating unit 10

The fluid-type temperature-regulating unit 10 heats the fluid using high-temperature refrigerant. The fluid-type temperature-regulating unit 10 has a heat exchanger 20 and a fluid circuit 19.

The heat exchanger 20 functions as a refrigerant condenser. The heat exchanger 20 transmits heat from the high-pressure gas refrigerant received from the refrigerant inlet port 15 to the fluid circulating through the fluid circuit 19. The high-pressure gas refrigerant loses heat and is condensed in this process, and departs from the refrigerant outlet port 16 as high-pressure liquid refrigerant.

The fluid circuit 19 is a closed circuit. The fluid circuit 19 heats the fluid by the operation of the heat exchanger 20, and controls the temperatures of the fluids to be sent to the first temperature-regulating device 60, the second temperature-regulating device 70, and the third temperature-regulating device 80.

### (3) Detailed configuration of the fluid-type temperature-regulating unit 10

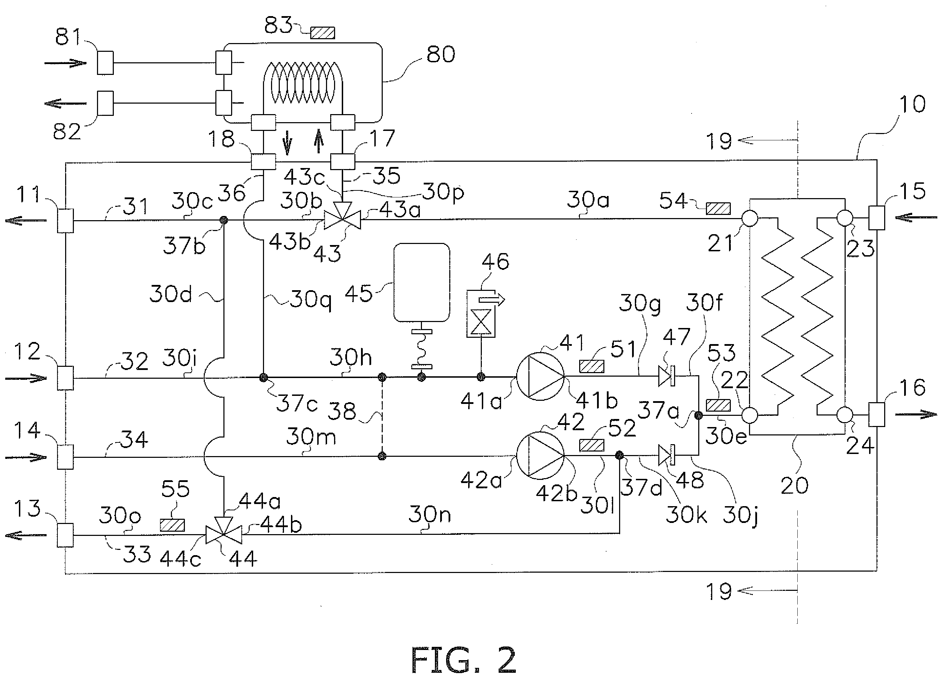

Fig. 2 shows a detailed configuration of the fluid-type temperature-regulating unit 10. The interface with the exterior in the fluid-type temperature-regulating unit 10 includes a first feed port 11, a first recovery port 12, a second feed port 13, a second recovery port 14, a refrigerant inlet port 15, a refrigerant outlet port 16, a third feed port 17, and a third recovery port 18. Each of the ports is provided with an illustrated valve for opening and closing.

The components of the fluid-type temperature-regulating unit 10 are described below.

### (3-1) Heat exchanger 20

The heat exchanger 20 is a plate heat exchanger for exchanging heat between a refrigerant and a fluid, and functions as a condenser as previously noted. A fluid inlet 22, a fluid outlet 21, a refrigerant inlet 23, and a refrigerant outlet 24 are provided to the heat exchanger 20. The refrigerant enters from the refrigerant inlet 23 and exits from the refrigerant outlet 24. The fluid enters from the fluid inlet 22 and exits from the fluid outlet 21. The fluid is heated by the heat of the refrigerant while the refrigerant and the fluid pass through the heat exchanger 20.

### (3-2) First conduit system

A first conduit system for controlling the temperature of the first temperature-regulating device 60 includes a first feed channel 31 and a first recovery channel 32.

### (3-2-1) First feed channel 31

The first feed channel 31 is a pathway for feeding heated fluid to the first temperature-regulating device 60. The first feed channel 31 extends from the fluid outlet 21, continues via a conduit 30a, a hot-water three-way valve 43, a conduit 30b, a heated-fluid branching point 37b, and a conduit 30c, and arrives at the first feed port 11.

### (3-2-2) First recovery channel 32

The first recovery channel 32 is a pathway for recovering cooled fluid released from the first temperature-regulating device 60. The first recovery channel 32 extends from the first recovery port 12, continues via a conduit 30i, a hot-water branching point 37c, a conduit 30h, a first pump 41, a conduit 30g, a first check valve 47, a conduit 30f, a fluid merge point 37a, and a conduit 30e, and arrives at the fluid inlet 22.

### (3-3) Second conduit system

A second conduit system for controlling the temperature of the second temperature-regulating device 70 includes a second feed channel 33 and a second recovery channel 34.

### (3-3-1) Second feed channel 33

The second feed channel 33 is a pathway for feeding heated fluid to the second temperature-regulating device 70. The second feed channel 33 extends from a fluid outlet 21, continues via the conduit 30a, the hot-water three-way valve 43, the conduit 30b, the heated-fluid branching point 37b, a conduit 30d, a mixing three-way valve 44, and a conduit 30o, and arrives at the second feed port 13.

In other words, the second feed channel 33 shares a portion of the components with the first feed channel 31.

A conduit 30n extending from the recovery fluid branching point 37d of the second recovery channel 34 is also connected to the mixing three-way valve 44.

### (3-3-2) Second recovery channel 34

The second recovery channel 34 is a pathway for recovering cooled fluid released from the second temperature-regulating device 70. The second recovery channel 34 extends from the second recovery port 14, continues via a conduit 30m, a second pump 42, a conduit 30l, the recovery fluid branching point 37d, a conduit 30k, a second check valve 48, a conduit 30j, the fluid merge point 37a, and the conduit 30e, and arrives at the fluid inlet 22.

In other words, the second recovery channel 34 shares a portion of the components with the first recovery channel 32.

### (3-4) Third conduit system

A third conduit system for controlling the temperature of the third temperature-regulating device 80 includes a third feed channel 35 and a third recovery channel 36.

### (3-4-1) Third feed channel 35

The third feed channel 35 is a pathway for feeding heated fluid to the third temperature-regulating device 80. The third feed channel 35 extends from the fluid outlet 21, continues via the conduit 30a, the hot-water three-way valve 43, and a conduit 30p, and arrives at the third feed port 17.

In other words, the third feed channel 35 shares a portion of the components with the first feed channel 31.

### (3-4-2) Third recovery channel 36

The third recovery channel 36 is a pathway for recovering cooled fluid released from the third temperature-regulating device 80. The third recovery channel 36 extends from the third recovery port 18, continues via a conduit 30q, the hot-water branching point 37c, the conduit 30h, the first pump 41, the conduit 30g, the first check valve 47, the conduit 30f, the fluid merge point 37a, and the conduit 30e, and arrives at the fluid inlet 22.

In other words, the third recovery channel 36 shares a portion of the components with the first recovery channel 32.

### (3-5) Expansion tank 45

An expansion tank 45 is provided to the conduit 30h of the first recovery channel 32. The expansion tank 45 serves to absorb an increased volume of the fluid, which flows in the fluid circuit 19 as a closed circuit, when the fluid expands due to increase in temperature and so on.

### (3-6) Relief valve 46

In addition to the above-described expansion tank 45, a relief valve 46 is provided to the conduit 30h of the first recovery channel 32. The relief valve 46 releases fluid to the exterior of the fluid circuit 19 when the pressure of the fluid increases and exceeds a predetermined threshold value. In other words, the relief valve 46 functions as a safety device that prevents cracks in the conduits or the like of the fluid circuit 19 when the volume of the fluid expands beyond the limit that can be accommodated in the expansion tank 45.

### (3-7) Communication tube 38

A communication tube 38 connects the conduit 30h of the first recovery channel 32 and the conduit 30m of the second recovery channel 34. The communication tube 38 induces greater pressure loss than the other conduits constituting the fluid circuit 19, and is constituted of a capillary tube having a small cross-sectional area, for example.

### (3-8) Various temperature sensors

Various temperature sensors are provided for monitoring the temperature of the fluid in some sections in the circuit. A first discharge port temperature sensor 51 measures the temperature of fluid at a first discharge port 41b for fluid discharged by the first pump 41. A second discharge port temperature sensor 52 measures the temperature of fluid at a second discharge port 42b for fluid discharged by the second pump 42. A heat-exchanger fluid inlet temperature sensor 53 measures the temperature of fluid at the fluid inlet 22. A heat-exchanger fluid outlet temperature sensor 54 measures the temperature of fluid at the fluid outlet 21. The mixed fluid temperature sensor 55 measures the temperature of fluid between the mixing three-way valve 44 and the second feed port 13.

### (3-9) Controller 200

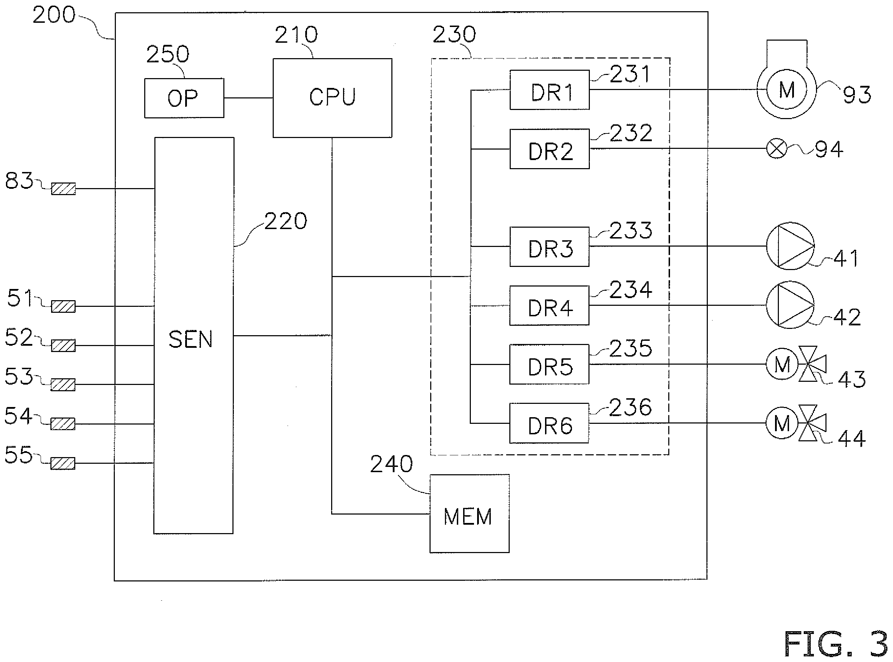

FIG. 3 is a block diagram of a controller 200 provided to the fluid-type temperature-regulating unit 10. The controller 200 is configured so as to control not only the sensors and/or actuators of the fluid-type temperature-regulating unit 10, but also the refrigerant circuit unit 90 and the third temperature-regulating device 80 (FIG. 1). Each section of the controller 200 may be disposed at any location in the environment-regulating system 100 (FIG. 1).

The controller 200 has a central processing unit 210, a sensor controller 220, an actuator controller 230, a memory section 240, and an operation panel 250. The central processing unit 210 directs the operation of each section. The sensor controller 220 acquires measurement values from the various sensors in the fluid-type temperature-regulating unit 10, and a hot-water apparatus temperature sensor 83 of the third temperature-regulating device 80, and performs A/D conversion to allow the central processing unit 210 to read the values. The actuator controller 230 controls the various actuators, and has a compressor motor controller 231, a decompressor controller 232, a first pump controller 233, a second pump controller 234, a three-way valve controller 235 for hot water, and a mixing three-way valve controller 236. The memory section 240 stores programs and data. The operation panel 250 receives settings input from a user and displays various statuses of the environment-regulating system 100.

### (3-10) Case 300

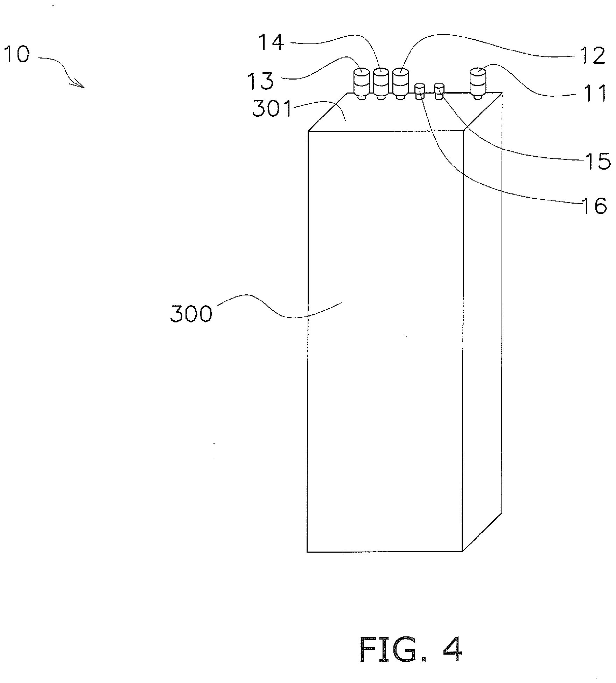

As shown in FIG. 4, the fluid-type temperature-regulating unit 10 has a case 300 for accommodating the fluid circuit 19 and the heat exchanger 20. The case 300 has a plurality of surfaces. The first feed port 11, the first recovery port 12, the second feed port 13, the second recovery port 14, the refrigerant inlet port 15, and the refrigerant outlet port 16 are provided on the same surface 301.

### (4) Temperature control

### (4-1) Temperature control of the first temperature-regulating device 60

Returning to FIG. 2, when the first temperature-regulating device 60 is to be used, the hot-water three-way valve 43 places a first port 43a and a second port 43b in communication with each other and disjoins a third port 43c. Therefore, the third temperature-regulating device 80 cannot be used.

Control is carried out so that the temperature of the heated fluid to be fed to the first temperature-regulating device 60 is 55°C. This control is carried out by regulating the rotational speed of the motor of the compressor 93 in the refrigerant circuit unit 90 so that the output of the heat-exchanger fluid outlet temperature sensor 54 becomes an appropriate value.

### (4-2) Temperature control of the second temperature-regulating device 70

When the second temperature-regulating device 70 is to be used, the hot-water three-way valve 43 places the first port 43a and the second port 43b in communication with each other and disjoins a third port 43c. Therefore, the third temperature-regulating device 80 cannot be used.

Control is carried out so that the temperature of the heated fluid to be fed to the second temperature-regulating device 70 is 35°C. With this control, the compressor 93 is controlled with the same method as that when the fluid is heated for the first temperature-regulating device 60 and the fluid brought to about 55°C is used. Also, the mixing three-way valve 44, the first pump 41, and the second pump 42 are controlled in the following manner.

### (4-2-1) Control of the mixing ratio of the mixing three-way valve 44

As shown in FIG. 2, the conduit 30d extending from the heated-fluid branching point 37b of the first feed channel 31 is connected to a first port 44a of the mixing three-way valve 44, and fluid at about 55°C flows therein. The conduit 30n extending from the recovery fluid branching point 37d of the second recovery channel 34 is connected to a second port 44b, and cooled fluid recovered from the second temperature-regulating device 70 flows therein. The mixing three-way valve 44 mixes these fluids in controlled mixing ratio, and the mixture is released from a third port 44c.

As shown in FIG. 3, the mixing ratio is controlled by driving the motor provided to the mixing three-way valve 44, and regulating the valve opening of the mixing three-way valve 44. The mixing ratio to be achieved is determined by the central processing unit 210 in accordance with an algorithm stored in the memory section 240 with reference to the output of the heat-exchanger fluid outlet temperature sensor 54, the second discharge port temperature sensor 52, and the mixed fluid temperature sensor 55. The output of each sensor is offered to the central processing unit 210 by the sensor controller 220. The central processing unit 210 regulates the valve opening of the mixing three-way valve 44 via the mixing three-way valve controller 236 to achieve the determined mixing ratio.

### (4-2-2) Control of the flow rate at the first pump 41

The first pump 41 has an inverter and is capable of varying the flow rate by control.

As shown in FIG. 2, the conduit 30h of the first recovery channel 32 is connected to the first intake port 41a through which the first pump 41 draws fluid, and the cooled fluid recovered from the first temperature-regulating device 60 flows therein. The first pump 41 discharges the fluid from the first discharge port 41b at the controlled flow rate.

As shown in FIG. 3, the flow rate to be achieved is determined by the central processing unit 210 in accordance with an algorithm stored in the memory section 240 with reference to the output of the first discharge port temperature sensor 51. The output of this sensor is offered to the central processing unit 210 by the sensor controller 220. The central processing unit 210 controls the first pump 41 via the first pump controller 233 to achieve the determined flow rate.

### (4-2-3) Control of the flow rate at the second pump 42

The second pump 42 also has an inverter and is capable of varying the flow rate by control.

As shown in FIG. 2, the conduit 30m of the second recovery channel 34 is connected to the second intake port 42a through which the second pump 42 draws fluid, and the cooled fluid recovered from the second temperature-regulating device 70 flows therein. The second pump 42 discharges the fluid from the second discharge port 42b at the controlled flow rate.

As shown in FIG. 3, the flow rate to be achieved is determined by the central processing unit 210 in accordance with an algorithm stored in the memory section 240 with reference to the output of the second discharge port temperature sensor 52 and the mixed fluid temperature sensor 55. The output of each sensor is offered to the central processing unit 210 by the sensor controller 220. The central processing unit 210 controls the second pump 42 via the second pump controller 234 to achieve the determined flow rate.

### (4-3) Temperature control of the third temperature-regulating device 80

Returning to FIG. 2, when the third temperature-regulating device 80 is to be used, the hot-water three-way valve 43 places the first port 43a and the third port 43c in communication with each other, and disjoins the second port 43b. Therefore, both the first temperature-regulating device 60 and the second temperature-regulating device 70 cannot be used.

The temperature of the heated fluid fed to the third temperature-regulating device 80 is controlled so as to be at a level that allows the third temperature-regulating device 80 to warm tap water to a specified temperature. This control is carried out by regulating the rotational speed of the motor of the compressor 93 in the refrigerant circuit unit 90 while the output of the hot-water apparatus temperature sensor 83 provided to the third temperature-regulating device 80 is monitored. The specified temperature is, e.g., a temperature inputted by a user using the operation panel 250 (FIG. 3).

### (5) Characteristics

### (5-1)

The fluid-type temperature-regulating unit 10 is provided with a first pump 41 for actuating the first temperature-regulating device 60, and a second pump 42 for actuating the second temperature-regulating device 70. Therefore, the first pump 41 and the second pump 42 are individually controlled, whereby the first temperature-regulating device 60 and the second temperature-regulating device 70 can be operated or stopped independently.

### (5-2)

The first pump 41 and the second pump 42 are capable of varying the flow rate. Therefore, the fluid-type temperature-regulating unit 10 can precisely control temperature because the degree of freedom for controlling the temperature of the fluid circuit is high.

### (5-3)

The temperatures of the fluid flowing to the first temperature-regulating device 60 and the second temperature-regulating device 70 are different. Therefore, the first temperature-regulating device 60 and the second temperature-regulating device 70 can be readily used for different applications, such as a radiator or a floor-warming apparatus.

### (5-4)

The fluid fed from the second feed port 13 is a mixture of the fluid just after being endowed with heat from the refrigerant in the heat exchanger 20 and the fluid from which heat has been taken by the second temperature-regulating device 70. Therefore, the temperature of the fluid fed to the second temperature-regulating device 70 can be set so as to be different from the temperature of the fluid fed to the first temperature-regulating device 60.

### (5-5)

The mixing ratio of the mixing three-way valve 44 is controlled in accordance with the temperature of the fluid at the fluid outlet 21 of the heat exchanger 20, the fluid at the second discharge port 42b, and the mixed fluid. Therefore, the temperature of the fluid fed to the second temperature-regulating device 70 can be automatically controlled.

### (5-6)

The flow rate of the first pump 41 is controlled in accordance with the temperature of the fluid at the first discharge port 41b. Therefore, the temperature of the fluid fed to the first temperature-regulating device 60 can be automatically controlled.

### (5-7)

The flow rate of the second pump 42 is controlled in accordance with the temperatures of the mixed fluid and the fluid at the second discharge port 42b. Therefore, the temperature of the fluid fed to the second temperature-regulating device 70 can be controlled with greater efficiency.

### (5-8)

A check valve 47 is provided to the first discharge port 41b, and a second check valve 48 is provided to the second discharge port 42b. Therefore, the fluid which has merged after having been discharged from the first pump and second pump is inhibited from flowing back toward the first pump 41 or the second pump 42.

### (5-9)

The communication tube 38 places the first intake port 41a and the second intake port 42a in communication with each other. Therefore, when the fluid in the second recovery channel 34 expands for some reason, the increase in volume of the fluid can be moved to the first recovery channel 32 by way of the communication tube 38.

### (5-10)

The first feed port 11, the first recovery port 12, the second feed port 13, the second recovery port 14, the refrigerant inlet port 15, and the refrigerant outlet port 16 are all provided on the same surface 301 of the case 300. Therefore, installation of the tubes is simple.

### (6) Modifications

### (6-1) Types of the first pump 41 and the second pump 42

In the embodiment described above, both the first pump 41 and the second pump 42 are capable of varying the flow rate. In lieu thereof, one of the first pump 41 and the second pump 42 may have a fixed flow rate. The cost of the fluid-type temperature-regulating unit 10 can be reduced in such a case.

### (6-2) Types of devices to be controlled

In the embodiment described above, the first temperature-regulating device 60, the second temperature-regulating device 70, and the third temperature-regulating device 80 are a radiator, a floor-warming apparatus, and a hot-water supply apparatus, respectively. In lieu thereof, these devices may be a panel-type radiator heater, a fan convector, or other device.

### (6-3) First modification of control details

In the embodiment described above, output from the heat-exchanger fluid inlet temperature sensor 53 is not used in the temperature control of the first temperature-regulating device 60, the second temperature-regulating device 70, and the third temperature-regulating device 80. In lieu thereof, higher precision temperature control can be carried out using the output of the heat-exchanger fluid inlet temperature sensor 53.

### (6-4) Second modification of control details

In the embodiment described above, the temperature of the fluid fed to the first temperature-regulating device 60 is about 55°C, and the temperature of the fluid fed to the second temperature-regulating device 70 is about 35°C. In lieu thereof, the temperature of the fluid fed to the first temperature-regulating device 60 and the second temperature-regulating device 70 may be other values. Furthermore, the temperature of the fluids fed to the first temperature-regulating device 60 and the second temperature-regulating device 70 may be set to be the same by placing the first port 44a and the third port 44c of the mixing three-way valve 44 in communication with each other and by disjoining the second port 44b.

### (6-5) Function of the refrigerant circuit unit 90

In the embodiment described above, the refrigerant circuit unit 90 has only a function for providing hot-heat to a fluid. In lieu thereof, the refrigerant circuit unit 90 may furthermore have a function for feeding cold-heat to the fluid. In such a case, the temperature-regulating device for cooling an objective may be connected to the fluid-type temperature-regulating unit 10 and used.

### REFERENCE SIGNS LIST

- 10: Fluid-type temperature-regulating unit
- 11: First feed port
- 12: First recovery port
- 13: Second feed port
- 14: Second recovery port
- 15: Refrigerant inlet port
- 16: Refrigerant outlet port
- 19: Fluid circuit
- 20: Heat exchanger
- 21: Heat-exchanger fluid outlet
- 22: Heat-exchanger fluid inlet
- 23: Heat-exchanger refrigerant inlet
- 24: Heat-exchanger refrigerant outlet
- 31: First feed channel
- 32: First recovery channel
- 33: Second feed channel
- 34: Second recovery channel
- 37a: Fluid merge point
- 38: Communication tube
- 41: First pump
- 41a: First intake port
- 41b: First discharge port
- 42: Second pump
- 42a: Second intake port
- 42b: Second discharge port
- 43: Hot-water three-way valve
- 44: Mixing three-way valve
- 51: First discharge port temperature sensor
- 52: Second discharge port temperature sensor
- 53: Heat-exchanger fluid inlet temperature sensor
- 54: Heat-exchanger fluid outlet temperature sensor
- 55: Mixed fluid temperature sensor
- 60: First temperature-regulating device
- 70: Second temperature-regulating device
- 80: Third temperature-regulating device
- 90: Refrigerant circuit unit
- 100: Environment-regulating system
- 200: Controller
- 210: Central processing unit
- 220: Sensor controller
- 233: First pump controller
- 234: Second pump controller
- 236: Mixing three-way valve controller
- 240: Memory section
- 300: Case
- 301: Surface

### CITATION LIST

### PATENT LITERATURE

Patent Literature 1: International Publication Gazette WO 2011/129248

## Claims

1. A fluid-type temperature-regulating unit (10) comprising:
a heat exchanger (20) having a heat-exchanger fluid inlet (22) for a fluid to enter, and a heat-exchanger fluid outlet (21) for the fluid endowed with cold-heat or hot-heat from a refrigerant to exit;
a first feed port (11) configured to feed the fluid to a first temperature-regulating device (60);
a first feed channel (31) configured to connect the heat-exchanger fluid outlet and the first feed port;
a first recovery port (12) configured to recover the fluid from the first temperature-regulating device;
a first recovery channel (32) connecting the heat-exchanger fluid inlet and the first recovery port;
a first pump (41) which is provided to the first recovery channel and which is configured to discharge the fluid from a first discharge port (41b);
a second feed port (13) configured to feed the fluid to a second temperature-regulating device (70);
a second feed channel (33) connecting the heat-exchanger fluid outlet and the second feed port;
a second recovery port (14) configured to recover the fluid from the second temperature-regulating device;
a second recovery channel (34) connecting the heat-exchanger fluid inlet and the second recovery port; and
a second pump (42) which is configured to discharge the fluid from a second discharge port (42b),
wherein:
the second pump is provided to the second recovery channel; and
the first discharge port and the second discharge port both are in communication with the heat-exchanger fluid inlet so that the fluid discharged from the first discharge port and the second discharge port is allowed to merge,
**characterized in that**:
at least one of the first pump and the second pump has an inverter for varying the flow rate of the fluid; and
the fluid-type temperature-regulating unit is configured such that the fluid fed from the second feed port is a mixture of the fluid just after being endowed with heat from the refrigerant in the heat exchanger and the fluid from which heat has been taken by the second temperature-regulating device.

2. The fluid-type temperature-regulating unit according to claim 1, wherein
the temperature of the fluid fed by the second feed port is different from the temperature of the fluid fed by the first feed port.

3. The fluid-type temperature-regulating unit according to claim 2, further comprising
a mixing three-way valve (44) provided to the second feed channel and configured to send to the second feed port a mixture of the fluid that exits from the heat-exchanger fluid outlet and the fluid discharged from the second discharge port.

4. The fluid-type temperature-regulating unit according to claim 3, further comprising:
a heat-exchanger fluid outlet temperature sensor (54) configured to measure the temperature of the fluid at the heat-exchanger fluid outlet;
a second discharge port temperature sensor (52) configured to measure the temperature of the fluid at the second discharge port;
a mixed fluid temperature sensor (55) configured to measure the temperature of the mixture expelled by the mixing three-way valve; and
a mixing ratio controller (210, 220, 236, 240) configured to vary the mixing ratio at the mixing three-way valve in accordance with the output of the heat-exchanger fluid outlet temperature sensor, the second discharge port temperature sensor, and the mixed fluid temperature sensor.

5. The fluid-type temperature-regulating unit according to claim 4, further comprising:
a first discharge port temperature sensor (51) configured to measure the temperature of the fluid at the first discharge port; and
a first flow rate controller (210, 220, 233, 240) configured to vary flow rate at the first pump in accordance with the output of the first discharge port temperature sensor.

6. The fluid-type temperature-regulating unit according to claim 4 or 5, further comprising:
a second flow rate controller (210, 220, 234, 240) configured to vary flow rate at the second pump in accordance with the outputs of the second discharge port temperature sensor and the mixed-fluid temperature sensor.

7. The fluid-type temperature-regulating unit according to any one of claims 1 to 6, further comprising:
a first check valve (47) arranged between the first discharge port and a fluid merge point (37a) whereat the fluid merges; and
a second check valve (48) arranged between the second discharge port and the fluid merge point.

8. The fluid-type temperature-regulating unit according to any one of claims 1 to 7, further comprising:
a communication tube (38) which is in communication with a first intake port (41a) of the first pump and a second intake port (42a) of the second pump,
the communication tube configured to induce greater pressure loss than any of the first feed channel, the first recovery channel, the second feed channel, and the second recovery channel.

9. The fluid-type temperature-regulating unit according to any one of claims 1 to 8, further comprising:
a refrigerant inlet port (15) configured to take the refrigerant into the heat exchanger;
a refrigerant outlet port (16) configured to expel the refrigerant from the heat exchanger; and
a case (300) which has a plurality of surfaces and which accommodates the heat exchanger, the first feed channel, the first recovery channel, the first pump, the second feed channel, the second recovery channel, and the second pump,
the first feed port, the first recovery port, the second feed port, the second recovery port, the refrigerant inlet port, and the refrigerant outlet port being arranged on the same single surface (301) among the plurality of surfaces.

## Patentansprüche

1. Fluid-Temperaturregeleinheit (10) mit:
einem Wärmetauscher (20), der einen Wärmetauscher-Fluideinlass (22) für den Eintritt eines Fluids und einen Wärmetauscher-Fluidauslass (21) für den Austritt des mit kalter Wärme oder heißer Wärme von einem Kältemittel ausgestatteten Fluids aufweist;
einem ersten Zufuhranschluss (11), der konfiguriert ist, das Fluid einer ersten Temperaturregelvorrichtung (60) zuzuführen;
einem ersten Zufuhrkanal (31), der konfiguriert ist, den Wärmetauscher-Fluidauslass und den ersten Zufuhranschluss zu verbinden;
einem ersten Rückgewinnungsanschluss (12), der konfiguriert ist, das Fluid aus der ersten Temperaturregelvorrichtung zurückzugewinnen;
einem ersten Rückgewinnungskanal (32), der den Wärmetauscher-Fluideinlass und den ersten Rückgewinnungsanschluss verbindet;
einer ersten Pumpe (41), die für den ersten Rückgewinnungskanal vorgesehen ist und die konfiguriert ist, das Fluid aus einem ersten Ausstoßanschluss (41b) auszustoßen;
einem zweiten Zufuhranschluss (13), der konfiguriert ist, das Fluid einer zweiten Temperaturregelvorrichtung (70) zuzuführen;
einem zweiten Zufuhrkanal (33), der den Wärmetauscher-Fluidauslass und den zweiten Zufuhranschluss verbindet;
einem zweiten Rückgewinnungsanschluss (14), der konfiguriert ist, das Fluid aus der zweiten Temperaturregelvorrichtung zurückzugewinnen;
einem zweiten Rückgewinnungskanal (34), der den Wärmetauscher-Fluideinlass und den zweiten Rückgewinnungsanschluss verbindet; und
einer zweiten Pumpe (42), die konfiguriert ist, das Fluid aus einem zweiten Ausstoßanschluss (42b) auszustoßen,
wobei:
die zweite Pumpe für den zweiten Rückgewinnungskanal vorgesehen ist; und
der erste Ausstoßanschluss und der zweite Ausstoßanschluss beide mit dem Wärmetauscher-Fluideinlass in Verbindung stehen, so dass es ermöglicht wird, dass das aus dem ersten Ausstoßanschluss und dem zweiten Ausstoßanschluss ausgestoßene Fluid vereinigt werden,
**dadurch gekennzeichnet, dass**:
mindestens eine der ersten Pumpe und der zweiten Pumpe einen Inverter zum Variieren des Durchsatzes des Fluids aufweist; und
die Fluid-Temperaturregeleinheit so konfiguriert ist, dass das aus dem zweiten Zufuhranschluss zugeführte Fluid eine Mischung des Fluids, gleich nachdem es mit Wärme aus dem Kältemittel im Wärmetauscher ausgestattet worden ist, und des Fluids ist, aus dem Wärme durch die zweite Temperaturregelvorrichtung entnommen worden ist.

2. Fluid-Temperaturregeleinheit nach Anspruch 1, wobei sich die Temperatur des aus dem zweiten Zufuhranschluss zugeführten Fluids von der Temperatur des durch den ersten Zufuhranschluss zugeführten Fluids unterscheidet.

3. Fluid-Temperaturregeleinheit nach Anspruch 2, die ferner aufweist:
ein Dreiwegemischventil (44), das für den zweiten Zufuhrkanal vorgesehen und konfiguriert ist, zum zweiten Zufuhranschluss eine Mischung des Fluids, das aus dem Wärmetauscher-Fluidauslass austritt, und des Fluids zu schicken, das aus dem zweiten Ausstoßanschluss ausgestoßen wird.

4. Fluid-Temperaturregeleinheit nach Anspruch 3, die ferner aufweist:
einen Wärmetauscher-Fluidauslass-Temperatursensor (54), der konfiguriert ist, die Temperatur des Fluids am Wärmetauscher-Fluidauslass zu messen;
einen zweiten Ausstoßanschluss-Temperatursensor (52), der konfiguriert ist, die Temperatur des Fluids am zweiten Ausstoßanschluss zu messen;
einen Mischfluid-Temperatursensor (55), der konfiguriert ist, die Temperatur der Mischung zu messen, die durch das Dreiwegemischventil ausgestoßen wird; und
eine Mischverhältnis-Steuereinrichtung (210, 220, 236, 240), die konfiguriert ist, das Mischverhältnis am Dreiwegemischventil entsprechend der Ausgabe des Wärmetauscher-Fluidauslass-Temperatursensors, des zweiten Ausstoßanschluss-Temperatursensors und des Mischfluid-Temperatursensors zu variieren.

5. Fluid-Temperaturregeleinheit nach Anspruch 4, die ferner aufweist:
einen ersten Ausstoßanschluss-Temperatursensor (51), der konfiguriert ist, die Temperatur des Fluids am ersten Ausstoßanschluss zu messen; und
eine erste Durchsatz-Steuereinrichtung (210, 220, 233, 240), die konfiguriert ist, den Durchsatz an der ersten Pumpe entsprechend der Ausgabe des ersten Ausstoßanschluss-Temperatursensors zu variieren.

6. Fluid-Temperaturregeleinheit nach Anspruch 4 oder 5, die ferner aufweist:
eine zweite Durchsatz-Steuereinrichtung (210, 220, 234, 240), die konfiguriert ist, den Durchsatz an der zweiten Pumpe entsprechend den Ausgaben des zweiten Ausstoßanschluss-Temperatursensors und des Mischfluid-Temperatursensors zu variieren.

7. Fluid-Temperaturregeleinheit nach einem der Ansprüche 1 bis 6, die ferner aufweist:
ein erstes Rückschlagventil (47), das zwischen dem ersten Ausstoßanschluss und einem Fluidvereinigungspunkt (37a) angeordnet ist, an dem sich das Fluid vereinigt; und
ein zweites Rückschlagventil (48), das zwischen dem zweiten Ausstoßanschluss und dem Fluidvereinigungspunkt angeordnet ist.

8. Fluid-Temperaturregeleinheit nach einem der Ansprüche 1 bis 7, die ferner aufweist:
eine Verbindungsröhre (38), die mit einem ersten Einlassanschluss (41a) der ersten Pumpe und einem zweiten Einlassanschluss (42a) der zweite Pumpe in Verbindung steht,
wobei die Verbindungsröhre konfiguriert ist, einen größeren Druckverlust als irgendeiner des ersten Zufuhrkanals, des ersten Rückgewinnungskanals, des zweiten Zufuhrkanals und des zweiten Rückgewinnungskanals zu verursachen.

9. Fluid-Temperaturregeleinheit nach einem der Ansprüche 1 bis 8, die ferner aufweist:
einen Kältemittel-Einlassanschluss (15), der konfiguriert ist, das Kältemittel in den Wärmetauscher aufzunehmen;
einen Kältemittel-Auslassanschluss (16), der konfiguriert ist, das Kältemittel aus dem Wärmetauscher auszustoßen; und
ein Gehäuse (300), das eine Vielzahl von Oberflächen aufweist und das den Wärmetauscher, den ersten Zufuhrkanal, den ersten Rückgewinnungskanal, die erste Pumpe, den zweiten Zufuhrkanal, den zweiten Rückgewinnungskanal und die zweite Pumpe beherbergt,
wobei der erste Zufuhranschluss, der erste Rückgewinnungsanschluss, der zweite Zufuhranschluss, der zweite Rückgewinnungsanschluss, der Kältemittel-Einlassanschluss und der Kältemittel-Auslassanschluss an derselben einzelnen Oberfläche (301) unter der Vielzahl der Oberflächen angeordnet sind.

## Revendications

1. Unité de régulation de température de type à fluide (10), comprenant :
un échangeur de chaleur (20) ayant une entrée de fluide (22) d'échangeur de chaleur permettant l'admission d'un fluide, et une sortie de fluide (21) d'échangeur de chaleur permettant l'évacuation du fluide porteur de chaleur froide ou de chaleur chaude d'un réfrigérant ;
un premier orifice d'alimentation (11) prévu amener le fluide vers un premier dispositif de régulation de température (60) ;
un premier canal d'alimentation (31) prévu pour relier la sortie de fluide d'échangeur de chaleur au premier orifice d'alimentation ;
un premier orifice de récupération (12) prévu pour récupérer le fluide du premier dispositif de régulation de température ;
un premier canal de récupération (32) reliant l'entrée de fluide d'échangeur de chaleur au premier orifice de récupération ;
une première pompe (41) disposée sur le premier canal de récupération et prévue pour refouler le fluide d'un premier orifice de refoulement (41b) ;
un deuxième orifice d'alimentation (13) prévu pour amener le fluide vers un deuxième dispositif de régulation de température (70) ;
un deuxième canal d'alimentation (33) reliant la sortie de fluide d'échangeur de chaleur au deuxième orifice d'alimentation ;
un deuxième orifice de récupération (14) prévu pour récupérer le fluide du deuxième dispositif de régulation de température ;
un deuxième canal de récupération (34) reliant l'entrée de fluide d'échangeur de chaleur au deuxième orifice de récupération ; et
une deuxième pompe (42) prévue pour refouler le fluide d'un deuxième orifice de refoulement (42b),
où :
la deuxième pompe est disposée sur le deuxième canal de récupération ; et
le premier orifice de refoulement et le deuxième orifice de refoulement sont tous deux en communication avec l'entrée de fluide d'échangeur de chaleur, de manière à permettre le mélange du fluide refoulé du premier orifice de refoulement et du deuxième orifice de refoulement,
**caractérisée en ce que** :
la première pompe et/ou la deuxième pompe présentent un inverseur pour varier le débit du fluide ; et
l'unité de régulation de température de type à fluide est conçue de telle manière que le fluide provenant du deuxième orifice d'alimentation est un mélange du fluide venant de recevoir la chaleur du réfrigérant dans l'échangeur de chaleur et du fluide dont la chaleur a été captée par le deuxième dispositif de régulation de température.

2. Unité de régulation de température de type à fluide selon la revendication 1, où la température du fluide provenant du deuxième orifice d'alimentation est différente de la température du fluide amené par le premier orifice d'alimentation.

3. Unité de régulation de température de type à fluide selon la revendication 2, comprenant en outre
une vanne de mélange à trois voies (44) disposée sur le deuxième canal d'alimentation et prévue pour guider vers le deuxième orifice d'alimentation un mélange du fluide présenté à la sortie de fluide d'échangeur de chaleur et du fluide refoulé par le deuxième orifice de refoulement.

4. Unité de régulation de température de type à fluide selon la revendication 3, comprenant en outre :
un capteur de température (54) de sortie du fluide d'échangeur de chaleur prévu pour mesurer la température du fluide à la sortie du fluide d'échangeur de chaleur ;
un capteur de température (52) de deuxième orifice de refoulement prévu pour mesurer la température du fluide sur le deuxième orifice de refoulement ;
un capteur de température (55) de fluide mélangé prévu pour mesurer la température du mélange sortant de la vanne de mélange à trois voies ; et
un contrôleur de rapport de mélange (210, 220, 236, 240) prévu pour varier le rapport de mélange sur la vanne de mélange à trois voies en fonction de la sortie du capteur de température de sortie du fluide d'échangeur de chaleur, du capteur de température de deuxième orifice de refoulement, et du capteur de température de fluide mélangé.

5. Unité de régulation de température de type à fluide selon la revendication 4, comprenant en outre :
un capteur de température (51) de premier orifice de refoulement prévu pour mesurer la température du fluide sur le premier orifice de refoulement ; et
un premier régulateur de débit (210, 220, 233, 240) prévu pour varier le débit sur la première pompe en fonction de la sortie du capteur de température de premier orifice de refoulement.

6. Unité de régulation de température de type à fluide selon la revendication 4 ou la revendication 5, comprenant en outre :
un deuxième régulateur de débit (210, 220, 234, 240) prévu pour varier le débit sur la deuxième pompe en fonction des sorties du capteur de température de deuxième orifice de refoulement et du capteur de température de fluide mélangé.

7. Unité de régulation de température de type à fluide selon l'une des revendications 1 à 6, comprenant en outre :
un premier clapet anti-retour (47) disposé entre le premier orifice de refoulement et un point de mélange de fluide (37a) où le fluide est mélangé ; et
un deuxième clapet anti-retour (48) disposé entre le deuxième orifice de refoulement et le point de mélange de fluide.

8. Unité de régulation de température de type à fluide selon l'une des revendications 1 à 7, comprenant en outre :
un conduit de communication (38), en communication avec un premier orifice d'admission (41a) de la première pompe et un deuxième orifice d'admission (42a) de la deuxième pompe, le conduit de communication étant prévu pour provoquer une perte de pression supérieure à celles du premier canal d'alimentation, du premier canal de récupération, du deuxième canal d'alimentation et du deuxième canal de récupération.

9. Unité de régulation de température de type à fluide selon l'une des revendications 1 à 8, comprenant en outre :
un orifice d'entrée de réfrigérant (15) prévu pour introduire le réfrigérant dans l'échangeur de chaleur ;
un orifice de sortie de réfrigérant (16) prévu pour évacuer le réfrigérant de l'échangeur de chaleur ; et
une carrosserie (300) présentant une pluralité de surfaces et où sont logés l'échangeur de chaleur, le premier canal d'alimentation, le premier canal de récupération, la première pompe, le deuxième canal d'alimentation, le deuxième canal de récupération et la deuxième pompe, le premier orifice d'alimentation, le premier orifice de récupération, le deuxième orifice d'alimentation, le deuxième orifice de récupération, l'orifice d'entrée de réfrigérant et l'orifice de sortie de réfrigérant étant présentés sur une seule et même surface (301) parmi la pluralité de surfaces.
